# DEMANDE DE BREVET EUROPEEN

(11) **EP 4 852 379 A1**
(43) Date de publication de la demande: **09.12.2026**
(21) Numéro de dépôt: 26183353.7
(22) Date de dépôt: 05.06.2026
(51) Int. Cl.: H04L 25/03, H04L 25/02

(54) **PROCÉDÉ D'ÉGALISATION PAR LISSAGE DE KALMAN AVEC RETOURS DE DECISION SEQUENTIELS, DISPOSITIF ET PROGRAMME ASSOCIÉS**

(30) Priorité: 05.06.2025 FR 2506106
(71) Demandeur: THALES, 92190 Meudon (FR); Université de Bordeaux, 33000 Bordeaux (FR); Centre National de la Recherche Scientifique, 75016 Paris (FR); Institut Polytechnique de Bordeaux, 33400 Talence (FR)
(72) Inventeur: Jadot, Laëtitia, 92622 GENNEVILLIERS CEDEX (FR); SAHIN, Serdar, 92622 GENNEVILLIERS CEDEX (FR); CHEVALIER, Pascal, 92622 GENNEVILLIERS CEDEX (FR); CIPRIANO, Antonio, 92622 GENNEVILLIERS CEDEX (FR); Péron, Jean-Luc, 92622 GENNEVILLIERS CEDEX (FR); FERRE, Guillaume, 33405 TALENCE CEDEX (FR); TAJAN, Romain, 33405 TALENCE CEDEX (FR)
(74) Mandataire: Lavoix

(57) **Abrégé**

La présente invention concerne un procédé d'égalisation temporelle (40) d'au moins un signal composé d'une pluralité de vecteurs d'observation, et procédant à :
- un filtrage en arrière (50) de la pluralité de vecteurs d'observation fournissant des estimées d'une pluralité de vecteurs d'état,
- un filtrage en avant conjoint à un lissage (60) comprenant une prédiction (62) et un premier lissage (64) de chaque vecteur d'état,
- une estimation d'un symbole transmis pour chaque vecteur d'observation,
et l'un au moins du filtrage en arrière (50) et du filtrage en avant conjoint à un lissage (60) comprenant pour chaque vecteur d'état :
- un procédé (66, 67, 68) de calcul d'un retour de décision,
- un filtrage supplémentaire (71) du vecteur d'état tenant compte du retour de décision, et
- dans le cas du filtrage en avant conjoint à un lissage (60), un lissage supplémentaire (72) du vecteur d'état.

## Description

La présente invention concerne un procédé d'égalisation temporelle du type mis en œuvre par un calculateur d'au moins un signal reçu par une chaîne de traitement d'un récepteur depuis un émetteur de transmission mono-porteuse et composé d'une pluralité de vecteurs d'observation, le procédé étant destiné à estimer un symbole transmis pour chaque vecteur d'observation et comportant un lisseur de Kalman mettant en œuvre des retours de décision séquentiels.

Un transfert d'information d'une source à une destination implique la propagation par un canal, qui peut être par exemple un canal radio, un canal filaire (par exemple un câble coaxial)... Certains moyens de propagation génèrent une interférence dite inter-symbole sur le signal reçu, autrement dit le signal reçu échantillonné à un instant donné, après compensation des retards de propagation et de traitement et ayant une synchronisation correcte, ne contient pas seulement le symbole envoyé (éventuellement amplifié et avec une perturbation de phase) plus du bruit, mais une combinaison linéaire de symboles envoyés.

Le phénomène d'interférence inter-symbole concerne notamment des récepteurs évoluant dans des environnements pour lesquels les canaux sont très sélectifs, par exemple des systèmes dans les bandes utltra haute fréquence UHF, haute fréquence HF, etc., militaires et civiles, comme la 4G, 5G, etc., ou artificiellement sélectifs, par exemple dans le cas des systèmes de transmissions coopératives où plusieurs émetteurs émettent le même signal simultanément.

Dans ce contexte, l'égalisation a pour but la réduction de l'effet nocif de l'interférence inter-symbole, également appelée ISI (de l'anglais « *Inter-Symbol Interference* »).

Pour traiter le problème de réduction de l'interférence inter-symbole, de nombreuses méthodes d'égalisation sont connues.

Les algorithmes d'égalisation doivent avoir une complexité calculatoire, une occupation de mémoire et une latence de traitement compatibles à la fois avec les applications qui utilisent les récepteurs en question et les contraintes des plateformes matérielles sur lesquelles ils sont implémentés. La problématique générale de l'égalisation est donc de trouver des algorithmes qui offrent le bon compromis entre performance et complexité d'implémentation par rapport aux applications visées.

Différentes classes d'égaliseurs existent : les égaliseurs linéaires, les égaliseurs à retour de décision (ou DFE en anglais « *Decision Feedback Equalizers* »), les égaliseurs à effacement d'interférence et les détecteurs de type maximum *a posteriori* ou de type estimation de séquence par maximum de vraisemblance. Chaque typologie d'égaliseur présente des avantages et des inconvénients.

En particulier, les égaliseurs de type DFE implémentés dans le domaine temporel permettent de gérer plus facilement les variations temporelles des canaux de propagation, malgré une complexité potentiellement plus importante que des égaliseurs en domaine fréquentiel qui doivent opérer sur des canaux quasi-statiques. Il existe plusieurs types d'égaliseurs, ils peuvent notamment être auto-itérés ou turbo-itérés.

Le choix structurel de filtrage temporel détermine la fenêtre d'observation, le retard de détection et notamment la complexité calculatoire de mise en œuvre. Il existe notamment des filtres transversaux à réponse impulsionnelle fini ou FIR (de l'anglais « *Finite Impulse Response* ») où l'on utilise une fenêtre d'échantillons observés glissants pour égaliser un symbole, des égaliseur blocs par bancs de filtre qui filtrent tout le bloc d'échantillons afin de simultanément égaliser tout le bloc de symboles transmis.

Le choix du type d'information à donner en retour est fondamental surtout dans le cas de retour de symboles. On peut notamment citer les retours de « décisions dures » classiques ou des retours souples qui peuvent se calculer sur la distribution de probabilité a posteriori d'un symbole, ou bien sur les messages extrinsèques fournis par l'algorithme de propagation d'espérance ou EP (de l'anglais « *Expectation Propagation* »). On précise que pour des raisons de clarté, on continuera à employer le terme de « retour de décision » pour désigner des estimées souples d'un symbole transmis qui seront fournies à un égaliseur.

Concernant le calcul de l'estimation de symboles à retourner, en particulier au niveau du bloc de démodulation de symboles, on peut utiliser des approximations plus ou moins avantageuses en performance ou en complexité.

Parallèlement à ces problèmes d'égalisation, pour d'autres problématiques soulevées par le traitement des communications, par exemple pour des problématiques d'estimation des signaux impulsives, des algorithmes d'estimation appelés « filtres de Kalman » se développent et similairement « les lisseurs de Kalman » apparaissent. Les filtres de Kalman sont des procédés d'estimation de l'état d'un système à partir d'une observation empirique et d'une connaissance a priori du modèle comportemental dynamique du système. Par exemple, le filtre de Kalman permet de prédire l'état à venir du système à partir des observations passées et à partir d'une hypothèse sur l'état initial. Un lisseur de Kalman complète un filtre de Kalman pour estimer l'état du système sur un horizon temporel et lisse les prédictions du filtre compte tenu de l'ensemble des observations sur cet horizon, en estimant au sens de l'erreur quadratique moyenne minimisée (en anglais, « Minimum Mean Square Error », ou MMSE) de l'état du système. Le fonctionnement d'un lisseur peut être également interprété comme une fusion d'information à partir de l'exécution d'un filtre de Kalman dans le cours naturel du temps (i.e. causal, on peut parler d'une filtrage en avant) et d'un filtre de Kalman dans le sens inverse du temps (i.e. anti-causal, dit filtrage en arrière).

Il existe diverses implémentations du lisseur de Kalman, on peut citer le lisseur RTS (Rauch-Tung-Striebel, d'après les auteurs), le lisseur à deux filtres (TF en anglais pour Two Fillter), le lisseur MBF (de l'anglais Modified Bryson-Frazier), lisseur BIFM (de l'anglais Backward Information, Forward Marginals) et le lisseur avec des filtres d'information symétriques. Ils diffèrent par la mise en œuvre du filtre de Kalman qu'ils utilisent (celui peut être différent entre le filtrage en avant ou le filtrage en arrière), par leur ordonnancement des traitements (le filtrage en avant peut être antérieur, postérieur ou simultané au filtrage en arrière) et par l'implémentation du lissage. En fonction de ces différences de conception, les différents lisseurs de Kalman présentent des caractéristiques et en particulier des complexités pouvant être très différentes.

L'utilisation d'un lisseur de Kalman comme estimateur MMSE a été donc bien répandu dans divers domaines de traitement du signal. Son utilisation en communications numériques en tant qu'un égaliseur MMSE a été étudié par l'homme de l'art, mais ses mises en œuvres classiques ne présentent pas d'avantages en complexité ou en performance suffisant vis-à-vis des égaliseurs MMSE fréquentiel ou égaliseurs MMSE temporelles avec filtres transversaux.

Néanmoins, J. Hu et al. décrivent dans "A general computation rule for lossy summaries /messages with examples from equalization" (2006) l'utilisation d'un lisseur de Kalman dans le cadre de l'égalisation et remarquent un gain de performance avec l'utilisation des retours de décision séquentielles et la propagation d'espérance. Ce type d'égaliseur présente des performances améliorées et prometteuses. Cependant, cette méthode ne donne pas entièrement satisfaction.

En effet, la structure de lisseur à deux filtres sur laquelle sont implémentés les retours de décision possède une complexité calculatoire significativement élevée à cause d'inversions très fréquents des matrices. Cela rend l'utilisation de cette solution en pratique improbable due aux exigences de capacités calculatoire trop excessifs.

Le but de l'invention est alors d'implanter des retours de décision au sein d'une structure de lisseur de Kalman avec un ordonnancement présentant une complexité calculatoire plus faible de manière à obtenir des estimations fiables du signal sans interférences inter-symboles tout en optimisant la complexité calculatoire.

A cet effet, l'invention a pour objet un procédé d'égalisation du type précité, caractérisé en ce que le lisseur de Kalman procède à :
- un filtrage en arrière de la pluralité de vecteurs d'observation fournissant des estimées en arrière et des estimées après filtre-adapté d'une pluralité de vecteurs d'état, puis
- un filtrage en avant conjoint à un lissage de la pluralité de vecteurs d'état sur la base du résultat du filtrage en arrière, le filtrage en avant conjoint à un lissage comprenant pour chaque vecteur de la pluralité de vecteurs d'état :
   a. une prédiction du vecteur d'état fournissant une estimée en avant du vecteur d'état,
   b. un premier lissage du vecteur d'état fournissant une estimée lissée du vecteur d'état obtenue par fusion de l'estimée en arrière du vecteur d'état et de l'estimée en avant du vecteur d'état,
- une estimation de chaque symbole transmis à partir au moins de chaque estimée lissée,
et lors de l'un au moins du filtrage en arrière et du filtrage en avant conjoint à un lissage, il comprend pour chaque vecteur de la pluralité de vecteurs d'état :
- un procédé de calcul d'un retour de décision à partir de l'estimée en arrière ou lissée du vecteur d'état,
- un filtrage supplémentaire du vecteur d'état tenant compte du retour de décision et des estimées après filtre-adapté pour obtenir une nouvelle estimée du vecteur d'état, et
- dans le cas du filtrage en avant conjoint à un lissage, un lissage supplémentaire du vecteur d'état calculant une nouvelle estimée lissée du vecteur d'état obtenue par fusion de l'estimée en arrière du vecteur d'état et de la nouvelle estimée du vecteur d'état.

Suivant des modes particuliers de mise en œuvre, le procédé d'égalisation comporte l'une ou plusieurs des caractéristiques suivantes, prises isolément ou suivant toutes les combinaisons techniquement possibles :
- Le filtrage en avant conjoint à un lissage comprend :
   - un procédé de calcul d'un retour de décision à partir de l'estimée lissée du vecteur d'état,
   - un filtrage supplémentaire du vecteur d'état tenant compte du retour de décision pour obtenir une nouvelle estimée en avant du vecteur d'état, et
   - un lissage supplémentaire du vecteur d'état comportant une nouvelle estimée lissée du vecteur d'état obtenue par fusion de l'estimée en arrière du vecteur d'état et de la nouvelle estimée en avant du vecteur d'état ;
- Le filtrage en arrière comprend :
   - un procédé de calcul d'un retour de décision à partir de l'estimée en arrière du vecteur d'état, et
   - un filtrage supplémentaire du vecteur d'état tenant compte du retour de décision pour obtenir une nouvelle estimée en arrière du vecteur d'état ;
- Le procédé de calcul d'un retour de décision est un procédé de modulation et démodulation souple exécuté au sein d'un bloc de modulation et démodulation souple sur un symbole transmis ;
- Le procédé de calcul d'un retour de décision repose sur l'utilisation d'une distribution de probabilités a priori estimée sur l'ensemble des symboles transmis ;
- Le procédé de calcul d'un retour de décision utilise des quantités provenant d'un décodeur ; et
- Le procédé de calcul d'un retour de décision met un œuvre un calcul d'un retour souple avec propagation d'espérance.

L'invention concerne également un procédé de réception de transmissions reçues d'un émetteur dans lequel le procédé de réception comprend :
- une égalisation des transmissions reçues, mise en œuvre par un procédé d'égalisation tel que décrit précédemment,
- une démodulation des transmissions égalisées,
- un désentrelaçage des transmissions démodulées, et
- un décodage des transmissions désentrelacées.

L'invention concerne également un dispositif de réception de signaux de communication propre à mettre en œuvre un procédé tel que décrit précédemment.

L'invention concerne également un programme d'ordinateur comportant des instructions logicielles qui, lorsqu'elles sont exécutées par un ordinateur, mettent en œuvre un procédé tel que décrit précédemment.

L'invention apparaîtra plus clairement à la lecture de la description qui va suivre, donnée uniquement à titre d'exemple non limitatif, et faite en référence aux dessins dans lesquels :
[Fig. 1] la figure 1 est un schéma d'une chaine de transmission d'un signal mettant en œuvre un procédé d'égalisation selon l'invention,
[Fig. 2] la figure 2 est un organigramme simplifié d'un procédé d'égalisation selon l'invention,
[Fig. 3] la figure 3 est un organigramme plus détaillé d'un procédé d'égalisation turbo-itéré utilisant des retours souples avec propagation d'espérance selon l'invention,
[Fig. 4] la figure 4 est un graphe de facteur présentant les étapes du filtrage en avant du procédé d'égalisation selon l'invention,
[Fig. 5] la figure 5 est un graphe de facteur présentant les étapes du filtrage en arrière conjoint au lissage du procédé d'égalisation selon l'invention,
[Fig. 6] la figure 6 est un graphe de facteur, et
[Fig. 7] la figure 7 est un organigramme.

L'invention s'applique dans le domaine des télécommunications dans un contexte de transmissions mono-porteuses présentant des interférences inter-symboles.

On présentera d'abord l'articulation des différents blocs de traitement du signal dont l'un est un égaliseur pour ensuite se focaliser sur le procédé d'égalisation selon l'invention.

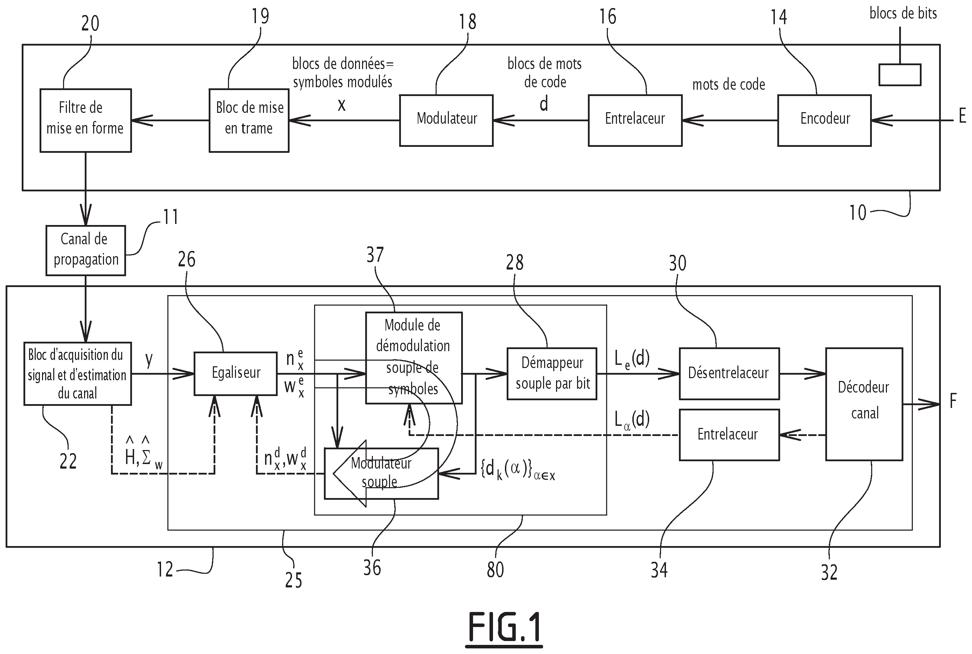

La chaine de transmission d'un signal illustré sur la figure 1 comporte un émetteur 10 propre à émettre un signal apte à se propager dans un canal de propagation 11 et un récepteur 12.

Le canal de propagation 11 traduit des perturbations du signal induites par un ensemble de phénomènes environnementaux qui affectent le signal transmis, comme un affaiblissement du signal, un évanouissement multi-trajets, des interférences et des phénomènes de dérive de fréquence.

Ces facteurs affectent le comportement et la qualité du signal et nécessitent la mise en œuvre de traitements plus ou moins complexes pour compenser ces perturbations.

Le récepteur 12 comporte des calculateurs de mise en œuvre du procédé d'égalisation selon l'invention.

L'émetteur 10 comporte une entrée pour un signal E et comporte comme connu en soi successivement un encodeur de canal 14, un entrelaceur 16, un modulateur de symboles 18, un bloc de mise en trame 19 et un filtre de mise en forme 20.

L'encodeur de canal 14 est propre à coder un ou plusieurs blocs de bits d'information *E* à transmettre par la mise en œuvre d'un code correcteur d'erreur pour fournir un ou plusieurs mots de codes.

L'entrelaceur 16 répartit les bits de ces mots de code en blocs de mots de code entrelacés d, constitués de *K_{d}* bits.

Ces blocs sont ensuite modulés par le modulateur 18 constitué d'un bloc de modulation linéaire sans mémoire *φ*, d'ordre M sous forme de blocs de données ***x***, constitué de *K* symboles transmis modulés, chaque symbole étant noté *xₖ* avec *k* un indice allant de 1 à *K*, tel que *K_{d}* = *KQ* avec *Q* = log₂ *M*.

Alors, en considérant l'utilisation d'une constellation $X ⊂ ℂ$, |*X*| = *M*, le *k*-ième groupe de *Q* bits issus du bloc de bits ***d***, noté ***d**ₖ* = [*d_{kQ}*, ... , *d*_{(k+1)*Q*-1}] est utilisé comme une étiquette binaire des points de *X*, avec *xₖ* = *φ*(***d**ₖ*).

On note aussi ${φ}_{q}^{- 1} \left({x}_{k}\right) ≜ {d}_{kQ + q}$ le q-ième bit de l'étiquette du symbole *xₖ*, avec *q* = 0, ... , *Q* - 1. Pour terminer, on pose aussi ${X}_{q}^{b} = \left\{α∈X\left|{φ}_{q}^{- 1}\left(α\right)=b\right.\right\}$, i.e. l'ensemble de tous les symboles *α* de la constellation *X* qui ont un bit de valeur *b* (0 ou 1) dans la q-ième position de leur étiquette binaire.

Ces notations sont nécessaires pour expliciter facilement les calculs des probabilités de bits et de symboles dans la suite.

Les blocs de données sont ensuite traités par un bloc de mise en trame 19.

Avantageusement, le bloc de mise en trame 19 permet l'insertion d'éventuelles séquences pilotes ou de séquences de synchronisation, ainsi que des symboles de préfixe ou de suffixe cyclique, et/ou des intervalles de garde.

Ce traitement permet au récepteur 12 de se synchroniser sur le signal, d'acquérir des éventuels paramètres sur le signal et de pouvoir estimer les éventuels perturbations du canal de propagation 11.

L'utilisation des intervalles de garde ainsi que des préfixes ou de suffixes cycliques permettent de minimiser les effets d'interférences entre les blocs de données et les séquences de signalisation.

Enfin, ces symboles sont traités par le filtre de mise en forme 20 avant d'être transmis sous forme d'un signal mono-porteuse.

En variante non représentée, des opérations de modulation et de démodulation en fréquence porteuse sont appliquées lors de la transmission d'un signal mono-porteuse.

Sans la représentation de ces opérations, le canal de propagation 11 ne constitue qu'un modèle équivalent en bande de base des phénomènes de propagation réels.

Un signal résultant de la propagation du signal émis par l'émetteur 10 dans le canal de propagation 11, est reçu par le récepteur 12.

Le récepteur 12 comprend un bloc 22 d'acquisition du signal en sortie du canal de propagation 11 et d'estimation du canal qui réalise un premier traitement afin de synchroniser le signal en sortie du canal en temps et en fréquence.

Par exemple, le bloc d'acquisition et d'estimation 22 exploite les séquences de référence insérées par le bloc de mise en trame 19, connues par le récepteur 12.

Le bloc d'acquisition et d'estimation 22 applique éventuellement un filtre adapté au filtre de mise en forme 20.

En outre, le bloc d'acquisition et d'estimation 22 est chargé d'exploiter les séquences de référence afin d'estimer les paramètres du canal de propagation qu'il peut transmettre à une chaîne de traitement 25 du récepteur 12, conjointement avec le signal traité.

Le signal synchronisé en sortie du bloc d'acquisition et d'estimation 22 et reçu par la chaîne de traitement 25 est par la suite appelé le signal reçu.

En sortie du bloc d'acquisition et d'estimation 22, nous considérons un signal reçu par la chaîne de traitement 25 en bande de base multivoie ***y*** de dimension d'observation *P*, correspondant au bloc de données ***x***.

La dimension d'observation *P* correspond par exemple à plusieurs antennes de réception, ou à plusieurs échantillons par symbole, ou à une combinaison des deux. Le signal reçu à l'instant *k*, *k* = 1, ... , *K* + *L* - 1, s'écrit : ${y}_{k} = {\sum }_{l = 1}^{L} {h}_{k , l} {x}_{k - l + 1} + {w}_{k}$ (1) avec ***h**_{k,l}* un vecteur P × 1 correspondant au *l^{ième}* trajet de la réponse impulsionnelle du canal, à l'instant *k*, et *wₖ* la réalisation à l'instant *k* d'un bruit gaussien, temporellement blanc, de moyenne nulle et de matrice de covariance ***Σ_{w}*** de taille *P* × *P.* Il s'agit d'un modèle de canal multi-trajets équivalent d'interférences inter-symboles de mémoire *L* - 1.

Les composantes du signal y sont appelées vecteurs d'observation ***y**ₖ*.

Considérons le vecteur d'état ${s}_{k} ≜ \left[{x}_{k};{x}_{k - 1};…;{x}_{k - L + 1}\right]$ de taille *L*, composé du symbole courant *xₖ* et des symboles passés (*x*_{*k*-1}; ... ; *x*_{*k-L*+1}) à l'instant *k,* alors le modèle de canal multi-trajets de l'équation (1) est décrit par : $\left\{\begin{matrix}{s}_{k} = G {s}_{k - 1} + e {x}_{k} \\ {y}_{k} = {H}_{k} {s}_{k} + {w}_{k}\end{matrix}\right. ,$ (2) où la matrice de transition d'état (ou « la matrice d'état ») est $G ≜ \left[\begin{matrix}0 & {0}_{1 , L - 1} \\ {I}_{L - 1} & {0}_{L - 1 , 1}\end{matrix}\right]$, le vecteur des entrées est $e ≜ \left[1; {0}_{L - 1 , 1}\right]$ et la matrice d'observation de taille P × *L* est donnée par ${H}_{k} ≜ \left[{h}_{k , 1},{h}_{k , 2},…,{h}_{k , L}\right]$ et ***w**ₖ* un bruit blanc gaussien de moyenne nulle et de matrice de covariance ***Σ_{w}***.

Sur la base d'un modèle stochastique, la distribution de probabilité a posteriori conjointe du bloc de données ***x*** et du bloc de mots de code entrelacés ***d***, étant donné le signal reçu y et les paramètres du modèle du canal ${\left\{{H}_{k}\right\}}_{k = 1}^{K + L - 1}$ et ***Σ_{w}***, se factorise comme suit : $p \left(\left.x, d\right|y,{\left\{{H}_{k}\right\}}_{k = 1}^{K + L - 1},{Σ}_{w}\right)$ $∝ p \left({s}_{0}\right) {\prod }_{k = 1}^{K + L - 1} \left[p\left(\left.{y}_{k}\right|{s}_{k}\right)p\left(\left.{s}_{k}\right|{s}_{k - 1},{x}_{k}\right)p\left(\left.{x}_{k}\right|{d}_{k}\right)p\left({d}_{k}\right)\right] {\prod }_{k = 1}^{K} \left[p\left(\left.{x}_{k}\right|{d}_{k}\right)p\left({d}_{k}\right)\right] {\prod }_{k = K + 1}^{K + L - 1} p \left({x}_{k}\right)$ où *p*(***s***₀) = *δ*(***s***₀ - **0**) et où *p*(*xₖ*) = *δ*(*xₖ* - 0) pour *k* = *K* + 1, ... , *K + L* - 1.

On identifie différentes équations, appelées facteurs, liant les quantités ***s**ₖ*, ***y**ₖ*, *xₖ* et *dₖ* : ${f}_{k}^{OBS} \left({y}_{k}, {s}_{k}\right) ≜ p \left({y}_{k}\left|{s}_{k}\right.\right) ∝ CN \left({y}_{k};{H}_{k}{s}_{k},{Σ}_{w}\right) ,$${f}_{k}^{KLM} \left({s}_{k}, {s}_{k - 1}, {x}_{k}\right) ≜ p \left(\left.{s}_{k}\right|{s}_{k - 1},{x}_{k}\right) ∝ δ \left({s}_{k}-G{s}_{k - 1}-e{x}_{k}\right) ,$ ${f}_{k}^{DEM} \left({x}_{k}, {d}_{k}\right) ≜ p \left(\left.{x}_{k}\right|{d}_{k}\right) ∝ {\prod }_{q = 1}^{Q} δ \left({d}_{k , q}-{φ}_{q}^{- 1}\left({x}_{k}\right)\right) = δ \left({x}_{k}-φ\left({d}_{k}\right)\right) ,$ ${f}^{DEC} \left({d}_{k}\right) ≜ {\prod }_{k = 1}^{K} p \left({d}_{k}\right) ∝ {\prod }_{k = 1}^{K} {\prod }_{q = 1}^{Q} Bernoulli \left({d}_{k , q}; {p}_{k , q}^{a}\right) ,$ où *δ* représente la distribution de Dirac et ${p}_{k , q}^{a}$ est la probabilité a priori sur l'évènement que le bit *d_{k,q}* du mot de code entrelacé soit égal à 1, la probabilité étant fournie par un décodeur canal 32 à entrées-sorties souples et le désentrelaceur 30. Dans les équations ci-dessus, 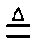 signifie « est défini comme » et ∝ signifie « est proportionnel à », Bernoulli(d; p) désigne une loi de Bernoulli sur la variable aléatoire *d*, de paramètre *p*, et 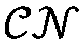 (***y***; ***m***, ***R***) désigne une loi gaussienne sur la variable aléatoire ***y***, de moyenne ***m*** et de matrice de covariance ***R***.

Ce modèle stochastique du signal reçu en sortie du bloc d'acquisition et d'estimation 22 permettra par la suite d'illustrer le fonctionnement des autres blocs du récepteur 12.

La chaîne de traitement 25 comporte un égaliseur 26 et un bloc de modulation et de démodulation souple 80 connecté à l'égaliseur 26.

Dans la chaîne de traitement 25 du récepteur 12, le bloc de modulation et démodulation souple 80 est relié en sortie à successivement un désentrelaceur 30 et un décodeur canal 32 réalisant respectivement les fonctions inverses de l'entrelaceur 16 et de l'encodeur 14.

Le bloc de modulation et de démodulation souple 80 utilise les estimées de symboles fournies par l'égaliseur 26, ainsi que les éventuelles estimées a priori fournies par un deuxième entrelaceur 34 et le décodeur canal 32.

Une estimée désigne avantageusement une quantité estimée.

Le bloc de modulation et de démodulation souple 80 fournit une estimée souple de symboles vers l'égaliseur 26, aussi appelée retour souple, en prenant en compte les caractéristiques de la constellation utilisée dans le modulateur 18.

Le bloc de modulation et de démodulation souple 80 utilise également les estimées de symboles fournis par l'égaliseur 26 pour calculer des log-rapports de vraisemblances ou LLRs (« log-likelihood ratio » en anglais) sur les bits *d_{k,q}* du mot de code entrelacée utilisés pour étiqueter le-dit symbole, au niveau du modulateur 18. Ces LLRs sont fournis au désentrelaceur 30 pour reconstituer une estimée souple du mot de code émis.

Le bloc de modulation et de démodulation souple 80 est placé en sortie de l'égaliseur 26.

Selon le mode de réalisation représenté sur la figure 1, le bloc de modulation et de démodulation souple 80 comprend un module de démodulation souple de symboles 37, un démappeur souple par bits 28 et un modulateur souple 36.

Le module de démodulation souple de symboles 37 calcule des probabilités sur les valeurs possibles du symbole *xₖ*, à partir des sorties de l'égaliseur 26 et les fournit au modulateur souple 36 et au démappeur souple par bit 28.

Le modulateur souple 36 utilise les probabilités calculées par le module de démodulation souple de symboles 37 pour calculer un retour souple.

Le démappeur souple par bits 28 est propre à effectuer un démapping, c'est-à-dire par exemple une marginalisation des probabilités calculées par le module de démodulation souple de symboles 37 sur les bits de l'étiquette de *xₖ* afin de calculer des LLRs sur les bits *d_{k,q}* du mot de code entrelacé.

Dans une variante non représentée du bloc de modulation et de démodulation souple 80, le démappeur souple par bits analytique 28 est un démappeur souple par bits analytique qui utilise directement les symboles en sortie de l'égaliseur 26 avec des formules analytiques liées aux propriétés de la constellation pour calculer les LLRs sur les bits *d_{k,q}* du mot de code entrelacé.

Ces LLRs sont fournis au désentrelaceur 30 en sortie, mais également au modulateur souple par bit 36, pour calculer un retour souple.

La chaîne formée par le bloc d'acquisition et d'estimation du canal 22 et la chaîne de traitement 25, c'est-à-dire comportant l'égaliseur 26, le bloc de modulation et de démodulation souple 80, le désentrelaceur 30 ainsi que le décodeur canal 32, est apte à fournir un signal décodé F issu du signal reçu par le récepteur 12.

Le signal décodé F est une estimation du signal E initialement en entrée de l'émetteur 10.

Avantageusement, la procédure de calcul du signal décodé F par le décodeur canal 32 est réutilisée dans le processus d'égalisation, dans une des mises en œuvre de l'invention, à travers la sortie du décodeur canal 32 qui fournit une deuxième estimée du mot de code.

A cet effet, le récepteur 12 comporte un deuxième entrelaceur 34 agencé entre une sortie du décodeur canal 32 et le bloc de modulation et de démodulation souple 80. Le deuxième entrelaceur 34 effectue les mêmes opérations que l'entrelaceur 16.

Nous allons maintenant décrire le principe d'un procédé d'égalisation 40 selon l'invention.

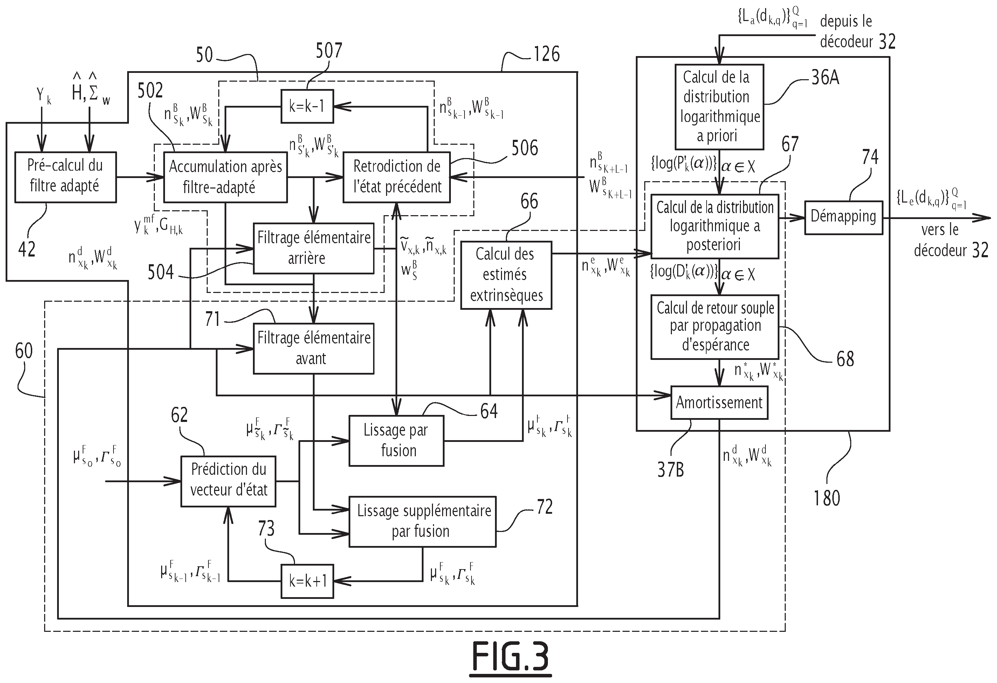

La figure 3 présente un schéma bloc des étapes du procédé d'égalisation 40 selon l'invention.

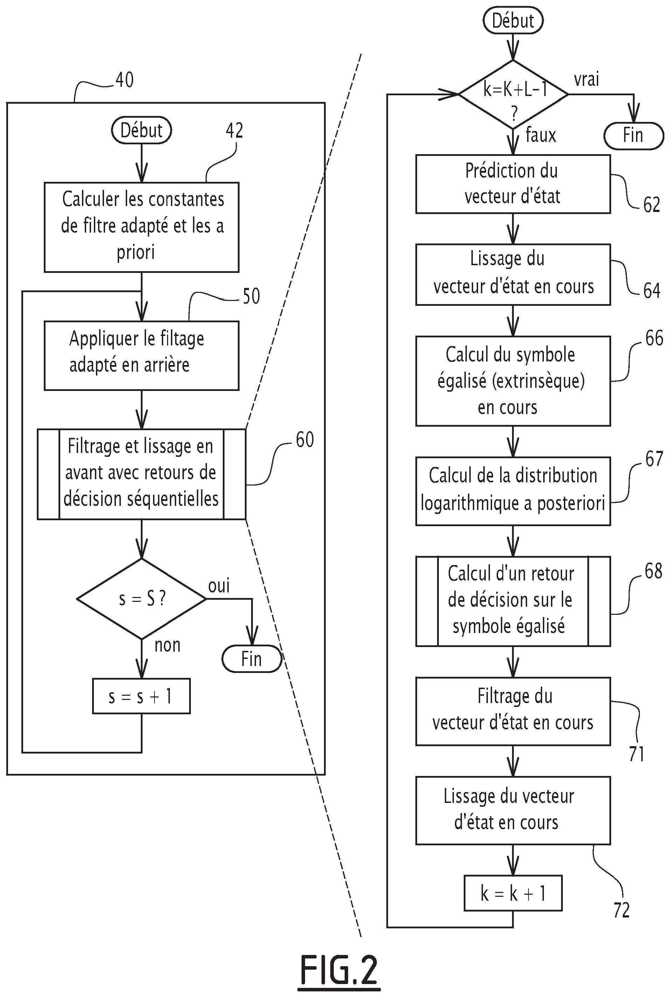

En référence à la figure 2, le procédé d'égalisation 40 mis en œuvre par le récepteur 12 comporte une première étape 42 de calcul des constantes du filtre adapté et de calcul des estimées a priori initiales, effectués dans l'égaliseur 26. La notion d'estimée a priori sera plus clairement définie plus loin.

Ensuite, dans une boucle d'auto-itération pour s allant de 0 à S, avec S le nombre d'auto-itérations, deux filtrages successifs 50 et 60 sont menés. Notamment, une première étape de filtrage en arrière 50 effectue un filtrage adapté ainsi que la fusion des estimées a priori. La seconde étape de filtrage en avant 60 effectue également le lissage de Kalman et intègre un retour de décision à travers le bloc de modulation et démodulation souple 80.

Par la suite, la notation *·^{F}* est utilisée pour indiquer une opération en avant en anglais « *forward* » et la notation *·^{B}* est utilisée pour indiquer une opération en arrière en anglais « *backward* »*.*

On entendra par lisseur de Kalman un procédé comportant au moins deux filtrages de Kalman et un lissage de Kalman.

Comme détaillé ultérieurement, le procédé d'égalisation 40 selon l'invention comporte un lisseur de Kalman.

Lorsqu'une estimée est calculée lors d'un filtrage en avant, elle est désignée par estimée en avant.

Lorsqu'une estimée est calculée lors d'un filtrage en arrière, elle est désignée par estimée en arrière.

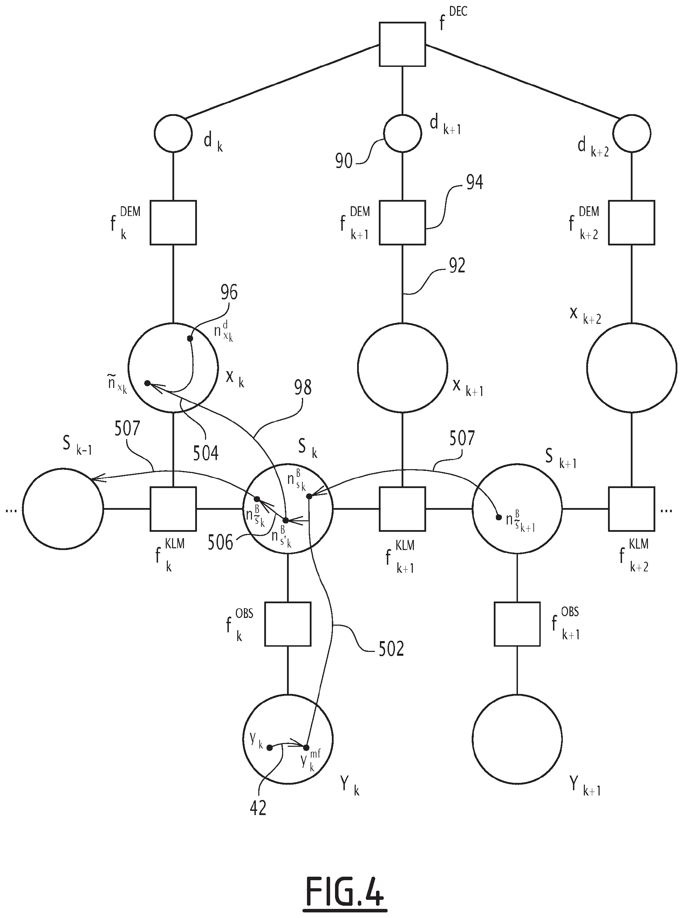

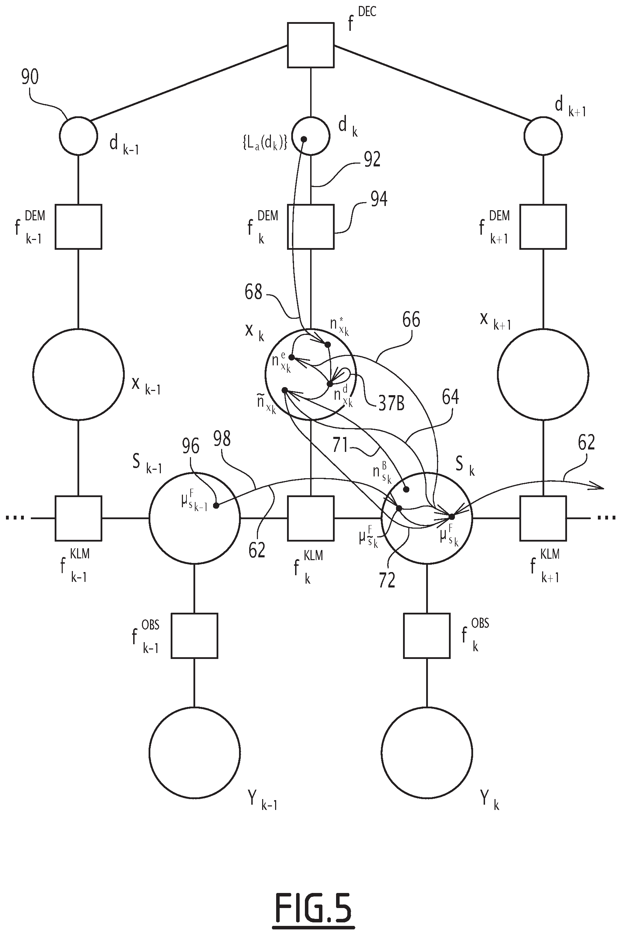

Les figures 4 et 5 représentent le modèle stochastique décrit plus haut entre les quatre quantités ***s**ₖ*, ***y**ₖ*, *xₖ* et ***d**ₖ* sous forme de graphes de facteur et décrivent les étapes effectuées lors du procédé d'égalisation 40. Sur ces figures, les quantités ***s**ₖ*, ***y**ₖ*, *xₖ* et ***d**ₖ* sont représentées par des cercles 90. Elles sont reliées entre elles par des segments 92 comportant des carrés 94. Les carrés 94 représentent les fonctions ${f}_{k}^{OBS} , {f}_{k}^{KLM} , {f}_{k}^{DEM}$ et *f*^{DEC}. Deux quantités représentées par des cercles 90, reliées entre elles par un segment 92 portant un carré 94 correspondent au fait que la fonction associée au carré 94 lie mathématiquement les deux quantités représentées par les cercles 90.

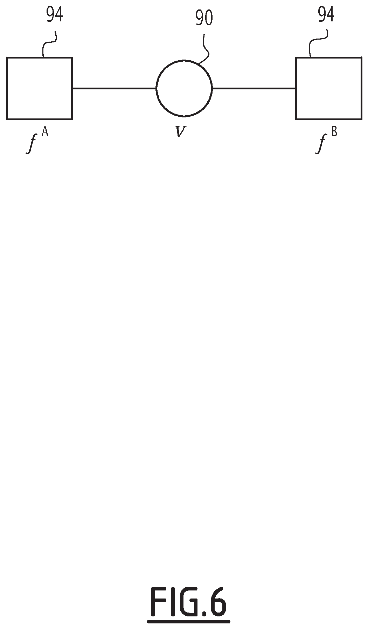

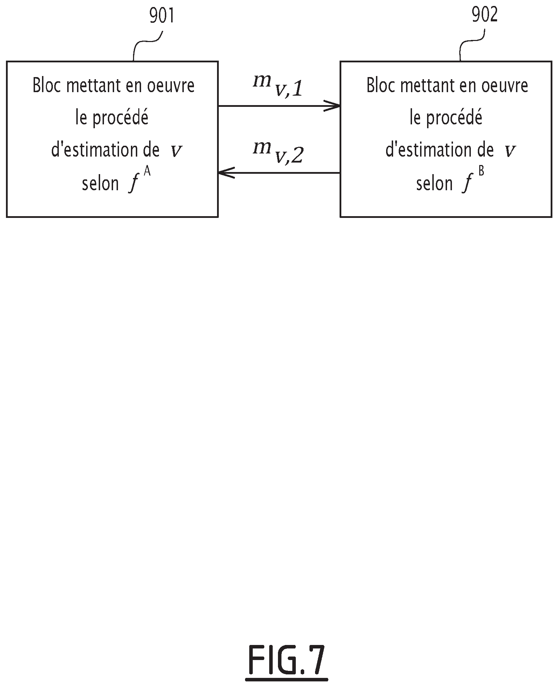

Afin de décrire ces notions, et d'introduire le vocabulaire associé, un exemple plus simple d'une distribution a posteriori *p*(*v*) sur une variable ***v*** est considéré en regard des figures 6 et 7, factorisé tel que *p*(*v*) ∝ *f^{A}*(***v***)*f^{B}*(***v***), avec *f^{A}* et *f^{B}* deux facteurs considérés. La figure 6 illustre un graphe de facteur élémentaire et la figure 7 illustre un schéma en bloc représentant l'algorithme associé qui effectue l'estimation de ***v***. En effet, les blocs 901 et 902 effectuent chacun une estimation de v selon respectivement les propriétés des facteurs *f^{A}* et *f^{B}*, et échangent à cet effet des estimées ***m***_{*v*,1} et ***m***_{*v*,2} sur la quantité ***v***. On dira que du point de vue du facteur *f^{A}* ou du bloc 901, ***m***_{*v*,1} est une « estimée extrinsèque » de ***v*** et ***m***_{*v*,2} est une « estimée a priori » de la variable v. Similairement, du point de vue du facteur *f^{B}* ou du bloc 902, ***m***_{*v*,1} est une « estimée a priori » de la variable v et ***m***_{*v*,2} est une « estimée extrinsèque » de ***v***. Par ailleurs, lorsqu'on fusionne des estimées extrinsèques (ou a priori, selon le point de vue) d'une même variable, venant de facteurs différents, on dit qu'on obtient une « estimée partielle » et quand on fusionne l'ensemble des estimées extrinsèques (ou a priori, selon le point de vue) d'une même variable ***v***, alors on obtient une « estimée a posteriori » de la variable, aussi appelée une « marginale » de la variable ***v***.

En regard des figures 4 et 5, au cours du procédé d'égalisation 40, seules les vecteurs d'observation ***y**ₖ* sont connues car correspondant aux éléments du vecteur de signal reçu ***y***. Les autres quantités ***s**ₖ*, ***d**ₖ* et *xₖ* seront estimées. Les petits cercles 96 représentent les estimées de ces quantités et sont placés dans le cercle 90 de la quantité qu'elles estiment.

Les flèches courbes 98 représentent les étapes qui seront appliquées pour déterminer chaque estimée.

Ces étapes sont obtenues à travers un algorithme de passage de message, qui consiste à assimiler les quantités ***s**ₖ* et *xₖ* à des variables aléatoires gaussiennes et à estimer les caractéristiques de leurs distributions.

Entre autre, chaque flèche courbe 98 est utilisée pour représenter un échange d'une estimée d'une variable, à partir des relations qui existent entre elles avec les carrés 94, et les estimée fournies par les segments 92 qui y sont connectés. Ces estimées échangées caractérisent des distributions de probabilités gaussiennes lorsqu'il s'agit des quantités ***s**ₖ* et *xₖ.*

Les caractéristiques d'une distribution de probabilité sont données par exemple chacune par une moyenne m et une matrice de covariance ***V*.**

Avantageusement, chaque estimée sera par exemple par la suite directement désignée par les caractéristiques (***m, V***) de la distribution de probabilité qui lui est associée.

De manière équivalente, un vecteur d'information est utilisé (aussi appelé « moyenne transformée ») ***n*,** donné par ***n*** = ***V*⁻¹*m*** et par une matrice d'information (aussi appelée « matrice de précision ») ***W*,** donné par ***W*** = ***V*⁻¹**. Ces notations sont utilisées lorsqu'il s'agit d'un échange d'estimée « a priori » ou « extrinsèque », selon les définitions qui ont été données plus haut.

Pour finir, au niveau d'un cercle 90, en combinant les différentes estimées extrinsèques, ou a priori, fournies sur une même variable, sa distribution de probabilité a posteriori est calculée, elle est aussi appelée « marginale ».

Lorsqu'il s'agit d'une distribution de probabilité a posteriori représentée par une fonction de densité de probabilité gaussienne, sa moyenne est notée ***µ*** et sa matrice de covariance est notée **Γ**, pour les distinguer des caractéristiques des distributions extrinsèques ou a priori.

Par souci de clarté des figures, seules les notations des caractéristiques ***n*** ou ***µ*** ne sont représentées sur les figures 4 et 5. Cependant, pour chaque flèche courbe 98 associée à une étape déterminant les caractéristiques ***n*** ou ***µ*,** la matrice ***W*** ou **Γ** associée est également déterminée.

Les étapes de filtrage et de lissage de Kalman peuvent ainsi être représentées à travers ce modèle, avec l'estimation du vecteur d'état ***s**ₖ* et du symbole transmis *xₖ* à partir des quantités qui les entourent sur les figures 4 et 5. On peut représenter ces calculs par des flèches. Les étapes de filtrage en arrière 50 et de filtrage en avant 60 sont donc représentées par des successions de flèches que l'on commentera ci-après.

Ainsi les quantités qui caractérisent les estimées sur ces figures dépendent, en effet, de la façon dont le filtrage Kalman est effectué.

Pour un filtre de Kalman par exemple, on utilisera les mises à jour sur les estimées extrinsèques caractérisées par une moyenne ***m**_{**s**ₖ}* et une matrice de covariance ***V**_{**s**ₖ}*.

Il est parfois nécessaire de décomposer certaines opérations sur le vecteur d'état en plusieurs sous-étapes, c'est pourquoi il existe également des estimations sur les quantités auxiliaires ***s̃**ₖ* ou ${s}_{k}^{′}$ qui sont des copies partiellement mises à jour du vecteur d'état ***s**ₖ*.

Plus de précisions sur le rôle de ces quantités auxiliaires peuvent être comprises à la lecture des travaux de Loeliger et al. dans "*The factor graph approach to model-based signal processing"* (2007).

Pour un filtre de Kalman, sous forme d'un « filtre d'information », par exemple, on utilisera les mises à jour sur les estimées extrinsèques caractérisées par un vecteur d'information ***n**_{**s**ₖ},* et une matrice d'information ***W**_{**s**ₖ}*.

Après un lissage de Kalman, c'est-à-dire la fusion de deux quantités filtrées suivant des directions opposés, on caractérisera la marginale de ***s**ₖ* par la moyenne ***µ**_{**s**ₖ}* et la matrice de covariance ***Γ**_{**s**ₖ}*.

Notre invention est constituée d'un lisseur de Kalman dit BIFM, où un filtre d'information Kalman en arrière est utilisé en première étape, pour estimer ***s***_{*k*-1} à partir de ***s**ₖ*, sur tout le long du signal reçu et par la suite l'étape de filtre en avant et de lissage est simultanément effectué en calculant les caractéristiques de la marginale de ***s**ₖ* à partir de ***s***_{*k*-1}, sur le long du signal reçu.

Les paramètres d'entrée du procédé d'égalisation sont les vecteurs ***y**ₖ* du signal ***y*** reçu par le récepteur 12, ainsi que les estimées ***Ĥ**ₖ* des matrices de canal ***H**ₖ* et les estimées ***Σ̂_{w}*** de la matrice de covariance ***Σ_{w}*** du bruit gaussien temporellement blanc. Ces estimées du modèle de canal en bande de base sont fournies par le bloc d'acquisition du signal et d'estimation du canal 22.

En outre, dans une variante, le bloc d'acquisition du signal et d'estimation du canal 22 met en œuvre des algorithmes d'estimation du canal comme par exemple un algorithme des moindres carrés, ou un autre algorithme, connu de l'homme de l'art, utilisé pour calculer ces estimées.

Le procédé d'égalisation 40 comprend un procédé principal d'égalisation 126 mis en œuvre par l'égaliseur 26 et un procédé de modulation et démodulation souple 180 mis en œuvre par le bloc de modulation et démodulation souple 80.

Au cours d'une première étape 42, un pré-calcul de l'estimation d'un message extrinsèque sur le vecteur d'état ***s**ₖ*, désigné dans la suite par estimée, est effectué pour tous les vecteurs ***y**ₖ* à partir des estimées de canal fournies par le bloc d'acquisition du signal reçu et d'estimation du canal 22.

Il s'agit de pré-calculer des quantités qui vont être constantes lors du procédé d'égalisation 40, mais réutilisées plusieurs fois.

Mathématiquement, un vecteur d'information ${y}_{k}^{mf}$ et sa matrice de précision ***G**_{**H**,k}* correspondant à l'estimée du vecteur d'état ***s**ₖ* sont calculés suivant la formule : $\left({y}_{k}^{mf}, {G}_{H , k}\right) = \left({\hat{H}}_{k}^{H}{\hat{Σ}}_{w}^{- 1}{y}_{k},{\hat{H}}_{k}^{H}{\hat{Σ}}_{w}^{- 1}{\hat{H}}_{k}\right)$

Le calculateur effectue ensuite une boucle d'itérations avec un filtrage en arrière 50 suivi d'un filtrage en avant conjoint à un lissage 60 par incrément de s de 0 à S avec S le nombre maximal d'auto-itérations , comme illustré sur la figure 2 et de manière détaillée sur la figure 3.

Avantageusement, le nombre maximal d'auto-itérations *S* est prédéterminé.

Le filtrage en arrière 50 est effectué pour toutes les estimations du vecteur d'information et de la matrice d'information de ***s**ₖ*, c'est-à-dire de *k* = *K* + *L* - 1 à *k =* 1 par valeurs décroissantes de *k,* pour obtenir une estimée partielle ( ${w}_{k}^{B}$,***ñ**_{x,k}*, *ṽ_{x,k}*), correspondant à une estimée en arrière, du vecteur d'état ***s**ₖ*, comme illustré par la flèche 504 sur la figure 4.

L'estimée partielle ( ${w}_{k}^{B}$, ***ñ**_{x,k}*, *ṽ_{x,k}*) du vecteur d'état ***s**ₖ* sera nécessaire ultérieurement pour une étape de lissage.

Par la suite, les étapes du filtrage en arrière 50 décrivent le traitement effectué sur un instant *k* et on suppose que l'algorithme a déjà été mis en œuvre pour les états *k* + 1 à *K* + *L* - 1, c'est-à-dire que les vecteurs ***y***_{*k*+1} à ***y***_{*K*+*L*-1} ont été traités.

Au cours de ce filtrage en arrière 50, une accumulation après filtre adapté 502 de l'estimée courante du vecteur d'état ***s**ₖ* caractérisée par un vecteur d'information ${n}_{{s}_{k}^{′}}^{B}$ et de sa matrice de précision ${W}_{{s}_{k}^{′}}^{B}$ est effectuée à partir :
- d'un vecteur d'information ${n}_{{s}_{k}}^{B}$ et de sa matrice de précision ${W}_{{s}_{k}}^{B}$ déterminés à l'itération précédente lors d'une étape de rétrodiction 506, et
- du vecteur d'information ${y}_{k}^{mf}$ déterminé au cours du pré-calcul du filtre adapté 42 et de sa matrice de précision ***G**_{**H**,k}.*

Le vecteur d'information et sa matrice de précision utilisés lors de la première itération sont initialisés à $\left({n}_{{s}_{K + L - 1}}^{B}, {W}_{{s}_{K + L - 1}}^{B}\right) = \left(0; 0\right)$.

Pour des raisons de stabilité numérique, il est possible d'initialiser la matrice de précision ${W}_{{s}_{K + L - 1}}^{B}$ par une matrice proportionnelle à l'identité avec un coefficient scalaire très petite, comme par exemple 10⁻⁸ · ***I**_{L}*.

A cet effet, la nouvelle estimée du vecteur d'état ***s**ₖ* après prise en compte du filtre-adapté, notée estimée après filtre-adapté ( ${n}_{{s}_{k}^{′}}^{B} , {W}_{{s}_{k}^{′}}^{B}$), est donnée par : $\left({n}_{{s}_{k}^{′}}^{B}, {W}_{{s}_{k}^{′}}^{B}\right) = \left({n}_{{s}_{k}}^{B}+{y}_{k}^{mf},{W}_{{s}_{k}}^{B}+{G}_{H , k}\right)$

On procède alors à une étape 504 de filtrage par fusion de l'estimée après filtre-adapté du symbole transmis *xₖ*, ( $\left({n}_{{s}_{k}^{′}}^{B}, {W}_{{s}_{k}^{′}}^{B}\right)$*)* fournie à l'étape précédente 502, avec une estimée a priori du même symbole, ( ${n}_{{x}_{k}}^{d} , {w}_{{x}_{k}}^{d}$). L'étape 504 de filtrage correspond à un filtrage élémentaire en arrière.

Cette estimée ( ${n}_{{x}_{k}}^{d} , {w}_{{x}_{k}}^{d}$), a priori, du point de vue du procédé principal d'égalisation 126, est issue du procédé de modulation et démodulation souple 180 effectué par le bloc de modulation et démodulation souple 80, qui sera décrit ultérieurement.

La valeur de l'estimée ( ${n}_{{x}_{k}}^{d} , {w}_{{x}_{k}}^{d}$) est renouvelée à chaque auto-itération en passant de s à s + 1, comme illustré sur la figure 2.

Comme nous le verrons ultérieurement, l'ensemble des ${\left\{\left({n}_{{x}_{k}}^{d}, {w}_{{x}_{k}}^{d}\right)\right\}}_{k = 1 … K + L - 1}$ sera initialisé pour la première auto-itération s = 0.

Les nouvelles estimées filtrées, correspondant à des estimées en arrière, du vecteur d'état ***s**ₖ* obtenue lors de l'étape 504 sont données par : ${{n}^{˜}}_{x , k} = e \left({n}_{{x}_{k}}^{d}+{e}^{T}{n}_{{s}_{k}^{′}}^{B}\right)$ ${{v}^{˜}}_{x , k} = {\left({w}_{{x}_{k}}^{d}+{e}^{T}{W}_{{s}_{k}^{′}}^{B}e\right)}^{- 1}$ ${w}_{k}^{B} = {W}_{{s}_{k}^{′}}^{B} e$

A l'issue des étapes 502 et 504, on procède à une étape 506 de rétrodiction de l'estimée de l'état précédent ***s***_{*k*-1}par la formule : $\left({n}_{{{s}^{˜}}_{k}}^{B}, {W}_{{{s}^{˜}}_{k}}^{B}\right) = \left({n}_{{s}_{k}^{′}}^{B}-{{v}^{˜}}_{x , k}{W}_{{s}_{k}^{′}}^{B},{{n}^{˜}}_{x , k},{W}_{{s}_{k}^{′}}^{B}-{{v}^{˜}}_{x , k}{w}_{k}^{B}{w}_{k}^{B H}\right)$ $\left({n}_{{s}_{k - 1}}^{B}, {W}_{{s}_{k - 1}}^{B}\right) = \left({G}^{T}{n}_{{{s}^{˜}}_{k}}^{B},{G}^{T}{W}_{{{s}^{˜}}_{k}}^{B}G\right)$

Lors de l'itération suivante en passant de *k* à *k* - 1, comme indiqué par le bloc 507 sur la figure 3, par récurrence, les estimées ( ${n}_{{s}_{k - 1}}^{B} , {W}_{{s}_{k - 1}}^{B}$) reprennent le rôle de la notation ( ${n}_{{s}_{k}}^{B} , {W}_{{s}_{k}}^{B}$) pour la mise en œuvre de l'étape 502.

Après le filtrage en arrière 50, le filtrage en avant 60 conjoint à un lissage avec un retour de décision est effectué pour tous les instants *k* de 1 à *K* + *L* - 1 par ordre croissant de *k*.

Pour un instant *k* donné, on suppose que l'algorithme a déjà été mis en œuvre pour les instants 1 à *k* - 1, c'est-à-dire que les vecteurs ***y***₁ à ***y***_{*k*-1} ont été traités.

Une prédiction de l'estimée en avant ***s**ₖ* de l'instant suivant de *k* est effectuée lors d'une étape de prédiction 62 en utilisant soit l'estimée de la marginale de ***s***_{*k*-1} représentée par un vecteur ( ${μ}_{{s}_{k - 1}}^{F} , {Γ}_{{s}_{k - 1}}^{F}$) de l'instant précédent pour *k* > 1, soit un vecteur initialisé à $\left({μ}_{{s}_{0}}^{F}, {Γ}_{{s}_{0}}^{F}\right) = \left(0,0\right)$.

Ainsi, chaque estimée partielle de la marginale du vecteur d'état ***s**ₖ* est liée à la marginale de ***s***_{*k*-1} par la relation suivante : $\left({μ}_{{{s}^{˜}}_{k}}^{F}, {Γ}_{{{s}^{˜}}_{k}}^{F}\right) = \left(G{μ}_{{s}_{k - 1}}^{F},G{Γ}_{{s}_{k - 1}}^{F}{G}^{T}\right)$

A partir de l'estimée de ***s**ₖ* représentée par les caractéristiques ( ${μ}_{{{{s}^{˜}}_{k}}_{}}^{F} , {Γ}_{{{s}^{˜}}_{k}}^{F}$), correspondant à une estimée en avant, fournis par l'étape de prédiction 62 et des estimées ( ${w}_{k}^{B}$, ***ñ***_{*x*,*k*}, *ṽ_{x,k}*) obtenues lors de l'étape 504, on procède à une étape de lissage 64 par fusion d'informations pour calculer une estimée lissée de la marginale du vecteur d'état ***s**ₖ* représentée par le vecteur ( ${μ}_{{s}_{k}}^{F} , {Γ}_{{s}_{k}}^{F}$) suivant les formules : ${Λ}_{k} = {I}_{L} - {{v}^{˜}}_{x , k} {w}_{k}^{B} {e}^{T}$ $\left({μ}_{{s}_{k}}^{F}, {Γ}_{{s}_{k}}^{F}\right) = \left({Λ}_{k}^{H}{μ}_{{{s}^{˜}}_{k}}^{F}+{{v}^{˜}}_{x , k}{{n}^{˜}}_{x , k},{Λ}_{k}^{H}{Γ}_{{{s}^{˜}}_{k}}^{F}{Λ}_{k}+{{v}^{˜}}_{x , k}e{e}^{T}\right)$

A partir de cette nouvelle estimée ( ${μ}_{{s}_{k}}^{F} , {Γ}_{{s}_{k}}^{F}$), correspondant à une estimée lissée, de la marginale de vecteur d'état ***s**ₖ* et de l'estimée a priori ( ${n}_{{x}_{k}}^{d} , {w}_{{x}_{k}}^{d}$) du symbole transmis *xₖ* calculée lors de l'itération antérieure sur s du procédé 180 de modulation et démodulation souple, une étape 66 de calcul de l'estimée extrinsèque *xₖ*, du point de vue du procédé principal d'égalisation 126, exprimée par le vecteur ( ${n}_{{x}_{k}}^{e} , {w}_{{x}_{k}}^{e}$) est effectuée avec la formule suivante : $\left({μ}_{{x}_{k}}, {γ}_{{x}_{k}}\right) = \left({e}^{T}{μ}_{{s}_{k}}^{F},{e}^{T}{Γ}_{{s}_{k}}^{F}e\right)$ $\left({n}_{{x}_{k}}^{e}, {w}_{{x}_{k}}^{e}\right) = \left({γ}_{{x}_{k}}^{- 1}{μ}_{{x}_{k}}-{n}_{{x}_{k}}^{d},{γ}_{{x}_{k}}^{- 1}-{w}_{{x}_{k}}^{d}\right)$

Ces calculs effectués lors de l'étape 66 de calcul d'estimée extrinsèque peuvent être susceptibles d'être soumis à des instabilités numériques lorsque ${w}_{{x}_{k}}^{d}$ est très proche de ${γ}_{{x}_{k}}^{- 1}$, et engendrer des valeurs trop grandes pour ${w}_{{x}_{k}}^{e}$.

Dans une variante, ces effets indésirables sont mitigés par une heuristique qui par exemple ne conserve que les valeurs calculées de ${w}_{{x}_{k}}^{e}$ comprises entre 10⁻⁸ et 10³ ou 10⁴. En dehors de ces limites, on peut approximer l'estimée extrinsèque à l'estimée marginale, en ignorant la contribution de l'estimée a priori, soit $\left({n}_{{x}_{k}}^{e}, {w}_{{x}_{k}}^{e}\right) = \left({γ}_{{x}_{k}}^{- 1}{μ}_{{x}_{k}},{γ}_{{x}_{k}}^{- 1}\right)$*.*

Le calculateur procède maintenant à deux étapes 67, 68 comportant un calcul d'un retour de décision pour fournir une nouvelle estimée a priori, du point de vue du procédé principal d'égalisation 126, sur le symbole transmis *xₖ* caractérisée par ( ${w}_{{x}_{k}}^{d} , {n}_{{x}_{k}}^{d}$) à partir en autres de l'estimée extrinsèque calculée ( ${n}_{{x}_{k}}^{e} , {w}_{{x}_{k}}^{e}$) lors de l'étape 66.

Dans le mode de réalisation présenté, on utilise un retour souple, c'est-à-dire qu'il utilise un retour de décision provenant du bloc de modulation et de démodulation souple 80. L'étape de calcul de retour de décision 68 est avantageusement une étape de calcul de retour souple.

Dans ce mode de réalisation, comme illustré sur la figure 3, on sort du procédé principal d'égalisation 126 pour utiliser aussi le bloc de modulation et de démodulation souple 80 au sein des itérations de l'égalisation, selon le procédé de modulation et démodulation souple 180.

Un exemple de procédé de modulation et démodulation souple 180 et donc de calcul de retours souples sera décrit ultérieurement.

Une étape 71 de filtrage supplémentaire par fusion de l'estimée après filtre-adapté ( ${n}_{{s}_{k}^{′}}^{B} , {W}_{{s}_{k}^{′}}^{B}$) et avec la nouvelle estimée a priori ( ${n}_{{x}_{k}}^{d} , {w}_{{x}_{k}}^{d}$) calculée avec le retour de décision, pour obtenir une estimée partielle, correspondant à une estimée en avant, sur le vecteur d'état ***s**ₖ*, noté par ( ${w}_{k}^{B}$, *ñ_{x,k}*, *ṽ_{x,k}*), est ensuite mise en œuvre. Cette étape 71 de filtrage par fusion, est similaire à l'étape 504 et s'effectue avec : $\left({{n}^{˜}}_{x , k}, {{v}^{˜}}_{x , k}\right) = \left(e\left({n}_{{x}_{k}}^{d}+{e}^{T}{n}_{{s}_{k}^{′}}^{B}\right),{\left({w}_{{x}_{k}}^{d}+{e}^{T}{w}_{k}^{B}\right)}^{- 1}\right)$ ${w}_{k}^{B} = {W}_{{s}_{k}^{′}}^{B} e$

Ensuite, une étape 72 de lissage supplémentaire par fusion des estimées extrinsèques est utilisé pour calculer des marginales, similairement à l'étape de lissage 64, mais en utilisant la valeur courante de l'estimée a priori fournie par le retour souple ( ${n}_{{x}_{k}}^{d} , {w}_{{x}_{k}}^{d}$) à travers l'estimée de caractéristiques ( ${w}_{k}^{B}$, *ñ_{x,k}*, *ṽ_{x,k}*) et fournie par l'étape 71 de filtrage supplémentaire. ${Λ}_{k} = {I}_{L} - {{v}^{˜}}_{x , k} {w}_{k}^{B} {e}^{T}$ $\left({μ}_{{s}_{k}}^{F}, {Γ}_{{s}_{k}}^{F}\right) = \left({Λ}_{k}^{H}{μ}_{{{s}^{˜}}_{k}}^{F}+{{v}^{˜}}_{x , k}{{n}^{˜}}_{x , k},{Λ}_{k}^{H}{Γ}_{{{s}^{˜}}_{k}}^{F}{Λ}_{k}+{{v}^{˜}}_{x , k}e{e}^{T}\right)$

Cela correspond à un filtrage supplémentaire 71 et un lissage supplémentaire 72 effectués après le retour de décision. L'étape 71 de filtrage correspond également à un filtrage élémentaire en avant.

On obtient alors un nouveau vecteur de marginales du vecteur d'état ***s**ₖ*, ( ${μ}_{{s}_{k}}^{F} , {Γ}_{{s}_{k}}^{F}$), correspondant à une nouvelle estimée lissée, qui sera utilisé, comme indiqué par le bloc 73 lors de l'itération ultérieure en passant de *k* à *k* + 1, pour l'étape de prédiction 62 sous la notation ( ${μ}_{{s}_{k - 1}}^{F} , {Γ}_{{s}_{k - 1}}^{F}$).

C'est la fin de l'étape 60 et du filtrage conjoint au lissage.

Cette étape de lissage supplémentaire 72 constitue donc la fin d'une auto-itération en *s*.

Maintenant nous allons décrire une variante du procédé de modulation et démodulation souple 180 mis en œuvre par le bloc de modulation et démodulation souple 80, permettant une mise en œuvre avantageuse du procédé 126.

Avantageusement, le module de démodulation souple de symboles 37 acquiert, depuis le décodeur 32, au travers le deuxième entrelaceur 34, des probabilités *a priori* ${p}_{k , q}^{a}$ sur les bits codés, du point de vue du procédé de modulation et démodulation souple 180, et entrelacés *d_{k,q},qQ.*

Ces bits étiquettent chaque symbole transmis *xₖ* et permettent d'obtenir une estimée a priori en provenance du décodeur 32 sur ces symboles.

Dans le mode de réalisation présenté, ces probabilités sont des rapports de vraisemblance logarithmique (ou LLRs de l'anglais « *Log-Likelihood Ratio* ») sur les bits, définis par exemple pour les probabilités a priori par : ${L}_{a} \left({d}_{k , q}\right) ≜ log \frac{1 - {p}_{k , q}^{a}}{{p}_{k , q}^{a}}$

Le bloc de modulation et démodulation souple 80 reçoit donc, depuis le décodeur 32, pour l'état *k,* un rapport de vraisemblance logarithmique *Lₐ*(***d**ₖ*) = {*Lₐ*(*d_{k,q}*)}_{*q*=1,...,*Q*}.

Le procédé 180 contient une étape 36A de calcul de la distribution logarithmique sur le symbole *xₖ* à partir du rapport de vraisemblance logarithmique a priori. $log {P}_{k}^{′} \left(α\right) = - {\sum }_{q = 1}^{Q} {φ}_{q}^{- 1} \left(α\right) {L}_{a} \left({d}_{k , q}\right) , ∀ α ∈ X$

Avantageusement, l'utilisation des LLRs a priori en provenance de décodeur 32 permet par exemple de turbo-itérer l'ensemble de l'égaliseur 26 et du bloc de modulation et démodulation souple 80, avec le décodeur 32. On parle alors de « turbo-égalisation ».

La turbo-itération permet de conjointement raffiner les performances d'égalisation du bloc de données et de décodage du mot de code.

Cependant, en variante, pour des raisons de coûts ou de latence par exemple, le procédé d'égalisation 40 est mis en œuvre sans turbo-égalisation. Dans ce cas, on peut par exemple considérer que ces LLRs a priori sont nuls, i.e., les bits sont équiprobables, et les valeurs de la distribution logarithmique de l'étape 36A sont nuls, et sans effets.

Ensuite, au cours de deux étapes successives 67 et 68 définies ultérieurement, un premier retour souple avec propagation d'espérance ( ${n}_{{x}_{k}}^{∗} , {w}_{{x}_{k}}^{∗}$) est calculé sur le symbole *xₖ* par une série de calculs explicités ci-dessous à partir de la distribution logarithmique a priori ${logP}_{k}^{′} \left(α\right)$ et de l'estimée extrinsèque, du point de vue du procédé 126, ( ${n}_{{x}_{k}}^{e} , {w}_{{x}_{k}}^{e}$) fournie par le procédé principal d'égalisation 126.

D'abord, une étape 67 de calcul d'une distribution logarithmique a posteriori est mise en œuvre suivant : ${m}_{{x}_{k}}^{e} = {{w}_{{x}_{k}}^{e}}^{- 1} {n}_{{x}_{k}}^{e}$ $log {D}_{k} ′ \left(α\right) = - {\left|{m}_{{x}_{k}}^{e}-α\right|}^{2} {w}_{{x}_{k}}^{e} + log {P}_{k} ′ \left(α\right) , ∀ α ∈ X$

Ensuite, une étape 68 de calcul de retour de décision normalise cette distribution pour calculer sa moyenne et sa variance, et retire les contributions des estimées a priori, du point de vue du procédé 180, ( ${n}_{{x}_{k}}^{e} , {w}_{{x}_{k}}^{e}$), avec : ${D}_{k} \left(α\right) = {e}^{log {D}_{k} ′ \left(α\right)} / {\sum }_{α ′ ∈ X} {e}^{log {D}_{k} \left(α′\right)} , ∀ α ∈ X$ ${μ}^{d} = {\sum }_{α ∈ X} {αD}_{k} \left(α\right)$ ${γ}_{{x}_{k}}^{d} = {\sum }_{α ∈ X} {\left|α\right|}^{2} {D}_{k}^{\left(s\right)} \left(α\right) - {\left|{μ}^{d}\right|}^{2}$ ${ω}_{x}^{d} = 1 / {γ}_{x}^{d}$ $\left({n}_{{x}_{k}}^{∗}, {w}_{{x}_{k}}^{∗}\right) = \left({μ}^{d}{ω}_{{x}_{k}}^{d}-{n}_{{x}_{k}}^{e},{ω}_{{x}_{k}}^{d}-{w}_{{x}_{k}}^{e}\right)$

L'étape de calcul de retour de décision 68 obtient donc une estimée extrinsèque du point de vue du procédé 180, et une nouvelle estimée a priori du point de vue de 126.

Néanmoins, la dernière opération de calcul sur ${w}_{{x}_{k}}^{∗}$ est susceptible d'être soumise à des instabilités numériques lorsque ${ω}_{{x}_{k}}^{d}$ et ${w}_{{x}_{k}}^{e}$ sont proches.

Ces effets indésirables peuvent être mitigés par une heuristique qui par exemple ne conserve les valeurs calculées de ${w}_{{x}_{k}}^{∗}$ comprises entre 10⁻⁸ et 10³ ou 10⁴.

En dehors de ces limites, on peut approximer l'estimée extrinsèque par l'estimée marginale de *xₖ*, en ignorant la contribution de l'estimée a priori, soit $\left({n}_{{x}_{k}}^{∗}, {w}_{{x}_{k}}^{∗}\right) = \left({μ}^{d}{ω}_{{x}_{k}}^{d},{ω}_{{x}_{k}}^{d}\right)$ .

Selon encore une variante, une mesure alternative ou supplémentaire pour accroitre la stabilité numérique est d'appliquer un traitement d'amortissement avant de fournir ces estimées au procédé principal d'égalisation 126.

A partir de ce retour souple ( ${n}_{{x}_{k}}^{∗} , {w}_{{x}_{k}}^{∗}$) et de la valeur courante du retour souple ( ${n}_{{x}_{k}}^{d} , {w}_{{x}_{k}}^{d}$), une étape 37B d'amortissement du retour souple est effectuée à partir d'un paramètre *β* ∈ [0; 1] pour actualiser la valeur courante du retour souple. $\left({n}_{{x}_{k}}^{d}, {w}_{{x}_{k}}^{d}\right) = \left({βn}_{{x}_{k}}^{∗}+\left(1-β\right){n}_{{x}_{k}}^{d},{βw}_{{x}_{k}}^{∗}+\left(1-β\right){w}_{{x}_{k}}^{d}\right)$

On obtient ainsi une valeur actualisée du retour souple ( ${n}_{{x}_{k}}^{d} , {w}_{{x}_{k}}^{d}$) lors de chaque auto-itération sur *s*. Pour l'auto-itération initiale où *s* = 0, pour tous les *k*, un retour souple ( ${n}_{{x}_{k}}^{d} , {w}_{{x}_{k}}^{d}$) a priori est initialisé à partir des seules log-probabilités ${logP}_{k}^{′} \left(α\right)$, en considérant que $\left({n}_{{x}_{k}}^{e}, {w}_{{x}_{k}}^{e}\right) = \left({0 , 10}^{- 8}\right)$.

Une fois les deux filtrages 50 et 60 effectués, et toutes les auto-itérations terminées dans le procédé illustré à la figure 2, au cours d'une nouvelle mise en œuvre de l'étape 67 de calcul d'une distribution logarithmique a posteriori et d'une étape de démapping 74, *Q* rapports de vraisemblance logarithmique extrinsèque {*Lₑ*(*d_{k,q}*)}_{*q*=1,...,*Q*} , du point de vue du procédé 180, est calculé par le démodulateur 28 pour les *Q* bits correspondant à chaque symbole transmis.

L'étape de démapping 74 est mise en œuvre par le démappeur souple par bit 28 visible sur la figure 1.

Au cours de l'étape 67 de calcul d'une distribution logarithmique a posteriori, pour tous les *k* allant de 1 à *K* + *L* - 1, une log-distribution ${logD}_{k}^{′} \left(α\right)$ est calculée dans le module de démodulation souple de symboles 37 à partir de la log-distribution initiale ${\left\{{logP}_{k}^{′}\left(α\right)\right\}}_{α ∈ X}$ et de la dernière estimée calculée pour l'instant *k,* ( ${w}_{{x}_{k}}^{e} , {n}_{{x}_{k}}^{e}$) : ${m}_{{x}_{k}}^{e} = {{w}_{{x}_{k}}^{e}}^{- 1} {n}_{{x}_{k}}^{e}$ ${logD}_{k}^{′} \left(α\right) = - {\left|{m}_{{x}_{k}}^{e}-α\right|}^{2} {w}_{{x}_{k}}^{e} + {logP}_{k}^{′} \left(α\right) , ∀ α ∈ X$

Ensuite, au cours de l'étape de démapping 74, un rapport de vraisemblance logarithmique extrinsèque {*Lₑ*(*d_{k,q}*)}_{*q*=1,...,*Q*} est calculé à partir du rapport de vraisemblance logarithmique a priori {*Lₐ*(*d_{k,q}*)}_{*q*=1,...,*Q*} et de la log-distribution ${logD}_{k}^{′} \left(α\right)$ qui vient d'être calculée suivant la formule : ${L}_{e} \left({d}_{k , q}\right) = log {\sum }_{α ∈ {X}_{q}^{0}} {e}^{{{logD}_{k}}^{'} \left(α\right)} - log {\sum }_{α ′ ∈ {X}_{q}^{1}} {e}^{{{logD}_{k}}^{'} \left({α}^{'}\right)} - {L}_{a} \left({d}_{k , q}\right) , ∀ q = 1 , … , Q$

Toujours au cours de l'étape de démapping 74, la LLR extrinsèque {*Lₑ*(*d_{k,q}*)}_{*q*=1,...,*Q*} est transmise au décodeur 32 à travers le désentrelaceur 30. La LLR extrinsèque {*Lₑ*(*d_{k,q}*)}_{*q*=1,...,*Q*} correspond à une estimation du symbole transmis (*xₖ*).

Dans une variante, les retours de décision séquentiels s'effectuent lors du filtrage en arrière 50 et ne s'effectuent pas au cours du filtrage en avant ou s'effectuent au cours des deux filtrages en arrière 50 et en avant 60.

Dans le cas pour lequel les retours de décision séquentiels s'effectuent lors du filtrage en arrière 50, alors, lors du filtrage en arrière 50, au sein d'une même boucle sur *k*, l'étape 504 est exécutée comme représentée dans la figure 3, puis les étapes 66, 36A, 68 et 37B puis l'étape 504 sont réexécutées.

Dans ce cas, l'étape de calcul 66 s'appliquerait à l'estimée ( ${n}_{{s}_{k}}^{d} , {W}_{{s}_{k}}^{d}$) et à un vecteur de marginales ( ${μ}_{{s}_{k}}^{F} , {Γ}_{{s}_{k}}^{F}$) calculé à partir de l'estimée ( ${n}_{{s}_{k}^{′}}^{B} , {W}_{{s}_{k}^{′}}^{B}$) déterminée à l'étape 502 d'après la formule : $\left({μ}_{{s}_{k}}^{F}, {Γ}_{{s}_{k}}^{F}\right) = \left({W}_{{s}_{k}^{′}}^{{B}^{- 1}}{n}_{{s}_{k}^{′}}^{B},{W}_{{s}_{k}^{′}}^{{B}^{- 1}}\right)$

Dans le mode de réalisation présenté, le facteur d'amortissement utilisé est un facteur d'amortissement simple *β* qui est appliqué sur la moyenne pondérée et la précision. Dans une variante, il est appliqué sur la moyenne et la variance. Avantageusement, ce facteur adaptatif dépend de paramètres extérieurs.

Le mode de réalisation représenté correspond à un procédé turbo-itéré comportant des retours de décision souples en provenance du bloc de modulation et de démodulation 80.

Dans un autre mode de réalisation, des retours de décision durs sont calculés suivant une réalisation alternative de l'étape de calcul de retour de décision 68 : ${n}_{{x}_{k}}^{∗} = \left({argmax}_{α ∈ X}{D}_{k}\left(α\right)\right) \times {10}^{3} , {w}_{{x}_{k}}^{∗} = {10}^{- 3}$

Dans encore un autre mode de réalisation, on effectue des décisions dures sur les estimées a posteriori et on y retire les a priori, avec ${μ}^{d} = {argmax}_{α ∈ X} {D}_{k} \left(α\right) , {γ}_{{x}_{k}}^{d} = {10}^{- 3}$ ${ω}_{x}^{d} = 1 / {γ}_{x}^{d}$ $\left({n}_{{x}_{k}}^{∗}, {w}_{{x}_{k}}^{∗}\right) = \left({μ}^{d}{ω}_{{x}_{k}}^{d}-{n}_{{x}_{k}}^{e},{ω}_{{x}_{k}}^{d}-{w}_{{x}_{k}}^{e}\right)$

Dans un autre mode de réalisation, le processus est simplement auto-itéré.

Dans encore un autre mode de réalisation, un procédé sans auto-itération ne procèderait qu'une fois à un filtrage en arrière et qu'une fois à un filtrage en avant.

Suivant un autre mode particulier de mise en œuvre, l'invention concerne en outre un procédé d'égalisation temporelle mis en œuvre par un calculateur d'au moins un signal reçu par une chaîne de traitement d'un récepteur depuis un émetteur de transmission mono-porteuse et composé d'une pluralité de vecteurs d'observation, le procédé étant destiné à estimer un symbole transmis pour chaque vecteur d'observation,
le procédé d'égalisation comportant un lisseur de Kalman mettant en œuvre des retours de décision séquentiels,
caractérisé en ce que le lisseur de Kalman procède à :
   - un pré-calcul d'un filtre adapté qui consiste à calculer à partir de la pluralité de vecteurs d'observations du signal reçu, et à partir des estimés des matrices de canal ***Ĥ**ₖ* et des estimés de la matrice de covariance ***Σ̂_{w}*** du bruit gaussien temporellement blanc, des estimations partielles d'une pluralité de vecteurs d'état,
   - un filtrage en arrière de la pluralité de vecteurs d'observation fournissant des nouvelles estimations partielles des vecteurs d'état comprenant pour chaque vecteur d'observation :
      a. un filtrage adapté du signal reçu à travers une accumulation pour chaque vecteur d'état des estimées partielles pré-calculées et des estimées issues d'une rétrodiction pour fournir une estimée en arrière du vecteur d'état,
      b. un premier filtrage élémentaire en arrière du symbole transmis (*xₖ*), en fusionnant l'estimée en arrière du vecteur d'état, avec une estimée a priori du symbole transmis (*xₖ*) initialement fournie par un bloc de modulation et démodulation souple, pour fournir une nouvelle estimés partielle du symbole transmis (*xₖ*),
   - un filtrage en avant conjoint à un lissage de la pluralité de vecteurs d'état sur la base du résultat du filtrage en arrière comprenant pour chaque vecteur d'état :
      a. une prédiction du vecteur d'état fournissant une estimée en avant du vecteur d'état,
      b. un premier lissage du vecteur d'état fournissant une estimée lissée du vecteur d'état obtenue par fusion de l'estimée en arrière du vecteur d'état et de l'estimée en avant du vecteur d'état,
      c. un calcul d'une estimée extrinsèque du symbole transmis à partir de l'estimée lissée du vecteur d'état, et d'une estimée a priori du symbole transmis initialement fournie par le bloc de modulation et démodulation souple,
      d. un procédé de modulation et démodulation souple, au sein du bloc de modulation et démodulation souple, pour obtenir un retour de décision à partir de l'estimée extrinsèque du symbole transmis,
      e. un filtrage élémentaire en avant du symbole transmis, en fusionnant l'estimée en arrière du vecteur d'état, avec le retour de décision du symbole transmis fourni par le bloc de modulation et démodulation souple, pour fournir une nouvelle estimée en avant du symbole transmis,
      f. un second lissage du vecteur d'état à partir de la nouvelle estimée en avant du symbole transmis, pour fournir une nouvelle estimée lissée du vecteur d'état, et
   - un calcul de plusieurs rapports de vraisemblance pour chaque symbole transmis à partir de l'estimée extrinsèque du symbole transmis.

## Revendications

1. Procédé d'égalisation temporelle (40) mis en œuvre par un calculateur d'au moins un signal (***y***) reçu par une chaîne de traitement (25) d'un récepteur (12) depuis un émetteur (10) de transmission mono-porteuse et composé d'une pluralité de vecteurs d'observation (***y**ₖ*), le procédé étant destiné à estimer un symbole transmis (*xₖ*) pour chaque vecteur d'observation (***y**ₖ*),
le procédé d'égalisation (40) comportant un lisseur de Kalman mettant en œuvre des retours de décision séquentiels,
**caractérisé en ce que** le lisseur de Kalman procède à :
- un pré-calcul d'estimées après filtre-adapté ( $\left({n}_{{s}_{k}^{′}}^{B}, {W}_{{s}_{k}^{′}}^{B}\right)$) d'une pluralité de vecteurs d'état (***s***ₖ) pour tous les vecteurs d'observation (***y**ₖ*) à partir d'estimées de canal fournies par le récepteur (12),
- un filtrage en arrière (50) de la pluralité de vecteurs d'observation (***y**ₖ*) fournissant des estimées en arrière ( $\left({w}_{k}^{B}, {{n}^{˜}}_{x , k}, {{v}^{˜}}_{x , k}\right)$) et des estimées après filtre-adapté ( $\left({n}_{{s}_{k}^{′}}^{B}, {W}_{{s}_{k}^{′}}^{B}\right)$) d'une pluralité de vecteurs d'état (***s**ₖ*),
- un filtrage en avant conjoint à un lissage (60) de la pluralité de vecteurs d'état (***s**ₖ*) sur la base du résultat du filtrage en arrière (50), le filtrage en avant conjoint à un lissage (60) comprenant pour chaque vecteur de la pluralité de vecteurs d'état (***s**ₖ*) :
a. une prédiction (62) du vecteur d'état (***s**ₖ*) fournissant une estimée en avant ( $\left({μ}_{{{s}^{˜}}_{k}}^{F}, {Γ}_{{{s}^{˜}}_{k}}^{F}\right)$) du vecteur d'état (***s**ₖ*),
b. un premier lissage (64) du vecteur d'état (***s***ₖ) fournissant une estimée lissée ( $\left({μ}_{{s}_{k}}^{F}, {Γ}_{{s}_{k}}^{F}\right)$) du vecteur d'état (***s***ₖ) obtenue par fusion de l'estimée en arrière ( $\left({w}_{k}^{B}, {{n}^{˜}}_{x , k}, {{v}^{˜}}_{x , k}\right)$) du vecteur d'état (***s***ₖ) et de l'estimée en avant ( $\left({μ}_{{{s}^{˜}}_{k}}^{F}, {Γ}_{{{s}^{˜}}_{k}}^{F}\right)$) du vecteur d'état (***s**ₖ*), puis
- une estimation de chaque symbole transmis (*xₖ*) à partir au moins de chaque estimée lissée ( $\left({μ}_{{s}_{k}}^{F}, {Γ}_{{s}_{k}}^{F}\right)$),
et **en ce que** lors de l'un au moins du filtrage en arrière (50) et du filtrage en avant conjoint à un lissage (60), il comprend pour chaque vecteur de la pluralité de vecteurs d'état (***s***ₖ) :
- un procédé (180) de calcul d'un retour de décision ( $\left({n}_{{x}_{k}}^{d}, {w}_{{x}_{k}}^{d}\right)$) à partir de l'estimée en arrière ( $\left({w}_{k}^{B}, {{n}^{˜}}_{x , k}, {{v}^{˜}}_{x , k}\right)$) ou lissée ( $\left({μ}_{{s}_{k}}^{F}, {Γ}_{{s}_{k}}^{F}\right)$) du vecteur d'état (***s**ₖ*),
- un filtrage supplémentaire (71) du vecteur d'état (***s***ₖ) tenant compte du retour de décision ( $\left({n}_{{x}_{k}}^{d}, {w}_{{x}_{k}}^{d}\right)$) et des estimées après filtre-adapté ( $\left({n}_{{s}_{k}^{′}}^{B}, {W}_{{s}_{k}^{′}}^{B}\right)$) pour obtenir une nouvelle estimée du vecteur d'état (***s**ₖ*), et
- dans le cas du filtrage en avant conjoint à un lissage (60), un lissage supplémentaire (72) du vecteur d'état (***s**ₖ*) calculant une nouvelle estimée lissée du vecteur d'état (***s**ₖ*) obtenue par fusion de l'estimée en arrière ( $\left({w}_{k}^{B}, {{n}^{˜}}_{x , k}, {{v}^{˜}}_{x , k}\right)$) du vecteur d'état (***s***ₖ) et de la nouvelle estimée du vecteur d'état (***s**ₖ*).

2. Procédé d'égalisation (40) selon la revendication 1, dans lequel le filtrage en avant conjoint à un lissage (60) comprend :
- un procédé (180) de calcul d'un retour de décision ( $\left({n}_{{x}_{k}}^{d}, {w}_{{x}_{k}}^{d}\right)$) à partir de l'estimée lissée ( $\left({μ}_{{s}_{k}}^{F}, {Γ}_{{s}_{k}}^{F}\right)$) du vecteur d'état (***s**ₖ*),
- un filtrage supplémentaire (71) du vecteur d'état (***s***ₖ) tenant compte du retour de décision ( $\left({n}_{{x}_{k}}^{d}, {w}_{{x}_{k}}^{d}\right)$) pour obtenir une nouvelle estimée en avant du vecteur d'état (***s**ₖ*), et
- un lissage supplémentaire (72) du vecteur d'état (***s***ₖ) comportant une nouvelle estimée lissée du vecteur d'état (***s**ₖ*) obtenue par fusion de l'estimée en arrière ( $\left({w}_{k}^{B}, {{n}^{˜}}_{x , k}, {{v}^{˜}}_{x , k}\right)$) du vecteur d'état (***s**ₖ*) et de la nouvelle estimée en avant du vecteur d'état (***s**ₖ*).

3. Procédé d'égalisation (40) selon la revendication 1 ou 2, dans lequel le filtrage en arrière (50) comprend :
- un procédé de calcul d'un retour de décision à partir de l'estimée en arrière ( $\left({{n}^{˜}}_{x , k}, {{v}^{˜}}_{x , k}\right)$) du vecteur d'état (***s**ₖ*), et
- un filtrage supplémentaire du vecteur d'état (***s**ₖ*) tenant compte du retour de décision pour obtenir une nouvelle estimée en arrière du vecteur d'état (*sₖ*).

4. Procédé d'égalisation (40) selon l'une quelconque des revendications précédentes, dans lequel le procédé (180) de calcul d'un retour de décision est un procédé de modulation et démodulation souple exécuté au sein d'un bloc de modulation et démodulation souple (80) sur un symbole transmis (*xₖ*).

5. Procédé d'égalisation (40) selon la revendication 4, dans lequel le procédé (180) de calcul d'un retour de décision repose sur l'utilisation d'une distribution de probabilités a priori ({ 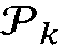 (*α*)}_{*α*∈*X*}) estimée sur l'ensemble des symboles transmis (*xₖ*).

6. Procédé d'égalisation (40) selon la revendication 4 ou 5, dans lequel le procédé (180) de calcul d'un retour de décision utilise des quantités ({*Lₐ*(*d_{k,q}*)}_{*q*=1,...,*Q*}) provenant d'un décodeur (32).

7. Procédé d'égalisation (40) selon l'une quelconque des revendications 4 à 6, dans lequel le procédé (180) de calcul d'un retour de décision met un œuvre un calcul d'un retour souple avec propagation d'espérance.

8. Procédé de réception de transmissions reçues d'un émetteur (10) dans lequel le procédé de réception comprend :
- une égalisation des transmissions reçues, mise en œuvre par un procédé d'égalisation (40) selon l'une quelconque des revendications précédentes,
- une démodulation des transmissions égalisées,
- un désentrelaçage des transmissions démodulées, et
- un décodage des transmissions désentrelacées.

9. Dispositif de réception (12) de signaux de communication propre à mettre en œuvre un procédé selon l'une quelconque des revendications précédentes.

10. Programme d'ordinateur, comportant des instructions logicielles qui, lorsqu'elles sont exécutées par un ordinateur, mettent en œuvre un procédé selon l'une quelconque des revendications 1 à 8.
